# FASCICULE DE BREVET EUROPEEN

(11) **EP 2 298 535 B1**
(45) Date de publication et mention de la délivrance du brevet: **08.02.2012**
(21) Numéro de dépôt: 10185558.3
(22) Date de dépôt: 25.06.2003
(51) Int. Cl.: B29C 51/28, B29C 51/14, B29C 70/44

(54) **Procede de fabrication de toiles et voiles formées et renforcées**
Verfahren zur Herstellung von geformten und verstärkten Bahnen und Segeln
Method for producing moulded and reinforced fabrics and sails

(30) Priorité: 02.07.2002 CH 11502002
(43) Date de publication de la demande: 23.03.2011
(62) Demande divisionnaire de: 09176973.7
(73) Titulaire: Createx S.A., 1110 Morges (CH)
(72) Inventeur: Gautier, Gérard, 1137 Yens (CH); Kessi, Edouard, 1162 St.-Prex (CH)
(74) Mandataire: Lawrence, John

(56) Documents cités:
- WO-A1-94/11185
- US-A- 6 106 649

## Description

La présente invention se rapporte à un procédé de fabrication de toiles formées et renforcées, et plus particulièrement à un procédé de fabrication de toiles formées et renforcées en continu alterné, la toile étant constituée par des éléments composites qui sont constitués par une membrane, étanche par exemple, qui enrobe des éléments de renforcement, des fils par exemple, les éléments constituant la toile pouvant être formés en trois dimensions de manière à ce que la toile présente une forme désirée en trois dimensions.

Les toiles renforcées et formées sont utilisées dans tous les cas où une toile doit être renforcée d'une manière générale et en particulier lorsqu'une toile doit être renforcée selon des directions particulières qui sont déterminées par les efforts qui agissent sur la toile. A titre d'exemple lorsqu'une toile fortement sollicitée par des efforts comporte des oeillets de fixation à l'endroit de ses angles ou ailleurs, des renforcements peuvent être nécessaires pour diffuser les efforts, maintenir la forme et éviter des déchirures. De plus, si des efforts importants agissent entre l'un ou l'autre des oeillets des renforcements peuvent être nécessaires dans la direction des efforts.

Dans de nombreux cas, il est nécessaire que la toile présente des formes particulières en trois dimensions que ce soit pour des raisons de performances ou pour des raisons esthétiques.

La fabrication de toiles de haute performance, renforcées et formées est soumise à plusieurs paramètres dont bien entendu les critères commerciaux qui impliquent qu'une toile doit être performante, aussi légère que possible et bien entendu d'un prix aussi bas que possible.

De nombreuses formes d'exécution de toiles renforcées et formées et de fabrication de toiles renforcées et formées sont connues mais elles présentent toutes de nombreux inconvénients.

Un inconvénient essentiel de toutes les toiles renforcées et formées de haute performance connues est que la structure de la toile est constituée par un assemblage d'éléments du type sandwich, c'est-à-dire que la toile est constituée au minimum de trois composants qui sont les éléments de renforcement qui sont assemblés par collage en sandwich entre deux feuilles de plastique polymérisé, par exemple divulgué en WO-A-94/11185. Ce type de construction de toile est coûteux et d'un poids assez élevé. Les feuilles de plastique polymérisé sont semi-rigides et ne peuvent pas permettre des déformations locales. La forme d'ensemble de la toile doit permettre d'obtenir une forme voulue sur l'ensemble de la dimension de la toile ce qui nécessite par conséquent des moules à la dimension totale de la voile qui sont très coûteux. Ces procédés de fabrication avec moules à dimension globale présente plusieurs inconvénients dont un des plus importants est le coût qui se reporte inévitablement sur le produit fini. Un autre inconvénient est l'encombrement de ces moules qui nécessitent de très grands locaux de production. De plus, le coût important des outillages implique un manque de flexibilité lorsque des changements de formes sont nécessaires ce qui retarde et rend les phases de développement très coûteuses. Les fils de renforcement étant généralement posés chacun d'une seule pièce avec ces formes d'exécution, le positionnement est très délicat.

D'autres formes d'exécution connues sont réalisées par l'assemblage de plusieurs panneaux de toile de découpes différentes, les panneaux étant assemblés entre eux par des coutures ou par collage. L'endroit des coutures est fragile et nécessite des panneaux de renforcement eux-mêmes rapportés par des coutures. Les efforts soumis à la toile sont donc dépendants de la résistance des coutures à ces endroits ce qui, comme dit, 'présente l'inconvénient de nécessiter des panneaux de renforcement qui contribuent à augmenter le poids d'ensemble de la toile. De plus, aux endroits des coutures et des panneaux de renforcement la toile est moins souple que les autres panneaux de la toile, ce qui provoque de nombreuses plissures et de la fatigue des matériaux lorsque la toile prend la forme voulue ce qui est inesthétique et ce qui peut réduire les performances de la toile pour certaines formes d'utilisation.

Les buts de la présente invention consistent donc à remédier aux inconvénients précités des formes d'exécution connues.

Les buts sont atteints selon les principes de l'invention tels que décrits dans la revendication 1.

Le procédé de fabrication de toiles formées et renforcées, selon les principes de l'invention, consiste à procéder à la fabrication de la toile en continu. Une presse de faible largeur par rapport à la longueur de la toile presse successivement les éléments constituants de la toile. Des éléments de renforcement, des fils par exemple, sont préparés sur un tapis qui est disposé déplaçable sur une table de préparation et des éléments de renforcement discontinus sont disposés en chevauchant la partie en attente de la toile déjà pressée. Les éléments de renforcement peuvent ainsi être disposés dans toutes les directions selon la direction et l'importance des efforts qui sont soumis à la toile. Les cuves supérieure et inférieure de la presse comportent des dispositifs déplaçables et réglables qui permettent de procurer lors du pressage une forme en trois dimensions voulue à des endroits voulus. Par avancements successifs de la toile et selon les réglages la toile peut présenter des portions plates ou présenter des portions en trois dimensions, la forme des portions en trois dimensions peut être variée rapidement selon la forme finale prévue pour la toile. Les éléments qui constituent la toile sont composés de fils qui sont enrobés d'une membrane qui est constituée par de la résine. Ces éléments se présentent avant pressage sous formes de bandes qui peuvent être constituées par un préimprégné de résine et de fils, la préimprégnation présentant l'avantage de maintenir les fils. Une fois pressée, la toile est constituée par la membrane qui est la résine qui enrobe les fils ou plutôt les filaments des fils. En effet les fils sont constitués par des milliers de filaments qui se répartissent sur la largeur de chaque bande. Lors de la préparation une partie de chaque bande est posée sur les bandes juxtaposées et lors du pressage les filaments des différentes bandes s'entremêlent entre eux de manière à constituer une toile homogène et étanche par exemple.

Les avantages des principes de l'invention sont nombreux. Un des avantages importants est que la toile une fois terminée est constituée, en coupe, par deux éléments qui sont la membrane et les filaments de renforcements, et en conséquence le procédé de fabrication permet de réduire les éléments en comparaison avec les formes d'exécutions connues à trois couches. Cette réduction du nombre d'éléments permet d'obtenir une réduction du poids et du coût.

Le fait que la toile terminée se présente sous forme d'une membrane enrobant des milliers de filaments entremêlés permet d'obtenir une toile très homogène, sans plissure et avec des renforcements qui permettent de résister à tous les efforts qui peuvent être soumis à la toile. La membrane et les filaments présentent encore l'avantage d'être pratiquement indéformables dans le sens des efforts tout en étant très souples lors du pliage de la toile par exemple.

La presse présente un très faible encombrement par rapport aux dimensions de toiles à fabriquer ce qui permet de l'installer dans des locaux de faibles dimensions.

Le dispositif de formage intégré à la presse qui permet d'obtenir des portions de toile en trois dimensions, ce qui permet d'obtenir une toile finie en trois dimensions, présente de nombreux avantages. Un de ces avantages est que le dispositif de formage permet de supprimer les outillages coûteux tels que les moules ou outillages à trois dimensions. En effet, le dispositif de formage peut permettre d'obtenir une multitude de formes différentes par de simples et très rapides réglages. Cet avantage est très important lors de la fabrication mais il est aussi très important lors du développement de nouvelles toiles présentant de nouvelles formes, le dispositif de réglage permettant d'obtenir très rapidement une nouvelle forme par de simples et rapides réglages.

L'invention est defini dans la revendication 1.

Selon un un procédé de fabrication d'une voile comprenant des éléments de renforcement et une résine comprend les étapes consistant à former les éléments de renforcement et la résine en bandes ; à positionner les bandes sur une surface, dans lequel les bandes sont positionnées pour se chevaucher partiellement ; à former au moins une partie des bandes en une forme tridimensionnelle, en fournissant une presse comportant une cuve supérieure avec un élément inférieur élastiquement souple et une cuve inférieure avec un élément supérieur élastiquement souple ; à transférer les bandes positionnées à partir de la surface et à positionner les bandes entre, et en contact avec, l'élément supérieur souple élastiquement et l'élément inférieur souple élastiquement ; à déformer au moins une partie de l'élément supérieur souple et au moins une partie de l'élément inférieur souple en une forme tridimensionnelle, déformant ainsi la partie des bandes en contact avec la partie de l'élément supérieur souple et la partie de l'élément inférieur souple en une forme tridimensionnelle ; à appliquer une pression et de la chaleur sur les bandes ; à activer et polymériser la résine pour enrober les éléments de renforcement, formant ainsi la toile.

Les éléments de renforcement peuvent comprendre des filaments, et les filaments peuvent être distribués dans la bande entière.

L'étape consistant à positionner peut comprendre l'étape consistant à fournir une ou plusieurs bandes supplémentaires le long d'au moins une partie d'une ligne prévue de force à laquelle la toile sera soumise. L'étape consistant à positionner peut comprendre l'étape consistant à fournir une ou plusieurs bandes supplémentaires dans un emplacement où la toile nécessitera un renforcement.

Selon un autre aspect, un procédé de fabrication de toiles formées et renforcées comprend des éléments de renforcement et une résine, le procédé comprend les étapes consistant à positionner les éléments de renforcement et la résine sur une surface, dans lequel les éléments de renforcement et la résine sont en contact les uns avec les autres ; à former au moins une partie des éléments de renforcement et au moins une partie de la résine en une forme tridimensionnelle ; à appliquer une pression et de la chaleur sur les éléments de renforcement et la résine ; à activer et polymériser la résine pour enrober les éléments de renforcement, formant ainsi la toile, et à retirer la toile de la surface.

L'étape consistant à positionner peut comprendre les étapes consistant à : former les éléments de renforcement et la résine en bandes ; et positionner les bandes sur la surface. L'étape consistant à former peut être réalisée de façon sensiblement simultanée à l'étape consistant à appliquer une pression et de la chaleur. L'étape consistant à former peut comprendre les étapes consistant à fournir une presse comportant une cuve supérieure avec un élément inférieur souple élastiquement et une cuve inférieure avec un élément supérieur souple élastiquement ; à positionner les éléments de renforcement et la résine entre, et en contact avec, l'élément supérieur souple élastiquement et l'élément inférieur souple élastiquement ; à déformer au moins une partie de l'élément supérieur souple et au moins une partie de l'élément inférieur souple en une forme tridimensionnelle, déformant ainsi la partie des éléments de renforcement et la partie de la résine en contact avec la partie de l'élément supérieur souple et la partie de l'élément inférieur souple en une forme tridimensionnelle. La cuve supérieure peut comprendre une latte de formage, et l'étape consistant à déformer peut comprendre les étapes consistant à : régler la forme de la latte de formage ; et mettre en contact l'élément inférieur souple avec la latte de formage réglée pour déformer la partie de l'élément inférieur souple, la partie de l'élément supérieur souple, la partie des éléments de renforcement, et la partie de la résine, en une forme tridimensionnelle. La surface peut comprendre une table de préparation. La table de préparation peut être séparée de la presse. L'étape consistant à activer la résine ou polymériser la résine peut comprendre l'étape consistant à chauffer la table de préparation.

La surface peut comprendre l'élément supérieur souple élastiquement de la cuve inférieure de la presse. L'étape consistant à activer la résine peut comprendre l'étape consistant à chauffer la table de préparation, et l'étape consistant à polymériser la résine peut comprendre l'étape consistant à chauffer la cuve supérieure ou chauffer la cuve inférieure. L'étape consistant à activer la résine ou polymériser la résine peut comprendre l'étape consistant à chauffer la presse.

L'étape consistant à positionner peut comprendre l'étape consistant à positionner les éléments de renforcement pour se chevaucher partiellement. L'étape consistant à positionner peut comprendre l'étape consistant à positionner au moins un élément de renforcement le long d'au moins une partie d'une ligne prévue de force à laquelle la toile sera soumise. L'étape consistant à positionner peut comprendre l'étape consistant à positionner au moins un élément de renforcement dans un emplacement où la toile nécessitera renforcement.

L'étape consistant à positionner peut comprendre l'étape consistant à positionner les bandes pour se chevaucher partiellement. L'étape consistant à positionner peut comprendre l'étape consistant à positionner au moins une bande le long d'au moins une partie d'une ligne prévue de force à laquelle la toile sera soumise.

L'étape consistant à positionner peut comprendre l'étape consistant à positionner au moins une bande dans un emplacement où la toile nécessitera un renforcement.

Les éléments de renforcement peuvent être imprégnés préalablement avec de la résine.

Les bandes peuvent comprendre des éléments de renforcement imprégnés préalablement avec de la résine.

L'étape consistant à positionner peut en outre comprendre l'étape consistant à positionner des bandes en contact avec au moins une partie d'une première toile comprenant un premier élément de renforcement et une première résine ; et le procédé peut en outre comprendre l'étape consistant à : joindre les bandes à la première toile en appliquant une pression et de la chaleur sur la première toile et les bandes qui sont en contact avec la première toile.

Les éléments de renforcement peuvent comprendre des filaments, et le procédé peut comprendre l'étape consistant à distribuer les filaments dans toute la toile.

L'élément de renforcement peut comprendre des filaments, et les filaments peuvent être distribués dans toutes les bandes.

La toile peut être formée essentiellement d'éléments de renforcement et de résine.

La toile peut être constituée essentiellement d'éléments de renforcement et de résine.

Selon un autre aspect, un procédé de fabrication de toiles formées et renforcées comprend des éléments de renforcement et une résine, le procédé comprend les étapes consistant à positionner les éléments de renforcement et la résine sur une surface, dans lequel les éléments de renforcement et la résine sont en contact les uns avec les autres ; à former au moins une partie des éléments de renforcement et au moins une partie de la résine en une forme tridimensionnelle ; à appliquer une pression et de la chaleur sur les éléments de renforcement et la résine ; à activer et polymériser la résine pour enrober les éléments de renforcement, formant ainsi la toile, dans lequel la toile comprend une première surface et une seconde surface opposée, et dans lequel la première surface et la seconde surface sont dépourvues de feuille séparée de plastique polymérisé ; et à retirer la toile de la surface.

L'étape consistant à positionner peut comprendre l'étape consistant à stratifier des bandes, les unes sur les autres, pour fournir une pluralité de couches.

Le procédé peut en outre comprendre l'étape consistant à positionner les bandes d'une première couche selon des angles par rapport aux bandes d'une seconde couche. L'étape consistant à positionner peut comprendre l'étape consistant à positionner au moins certaines des bandes pour se chevaucher sensiblement le long d'une longueur de chaque bande.

L'étape consistant à positionner peut comprendre l'étape consistant à positionner au moins certaines des bandes en parallèle, de sorte qu'une première extrémité d'une bande chevauche sensiblement une première extrémité d'une seconde bande.

Selon un autre aspect, un procédé de fabrication d'une toile comprend les étapes consistant à sélectionner une pluralité d'éléments de renforcement, dans lequel les éléments de renforcement sont formés de filaments qui sont alignés en forme de bande ; à agencer les éléments de renforcement pour former une bande ; à fournir une résine en contact avec les éléments de renforcement ; à positionner les bandes de sorte qu'au moins certaines des bandes chevauchent partiellement des bandes adjacentes ; et à activer la résine pour enrober les éléments de renforcement, formant ainsi la toile.

L'étape consistant à positionner peut comprendre l'étape consistant à positionner au moins une bande supplémentaire le long d'au moins une partie d'une ligne prévue de force à laquelle la toile sera soumise. L'au moins une bande supplémentaire peut être positionnée de façon sensiblement parallèle aux lignes prévues de force. L'au moins une bande supplémentaire peut être positionnée de façon sensiblement perpendiculaire aux lignes prévues de force. L'au moins une bande supplémentaire peut être positionnée de façon sensiblement parallèle et au moins une bande supplémentaire peut être positionnée de façon sensiblement perpendiculaire aux lignes prévues de force. L'étape consistant à positionner peut comprendre l'étape consistant à positionner au moins une bande supplémentaire dans un emplacement où la toile nécessitera un renforcement.

Les bandes peuvent comprendre des éléments de renforcement imprégnés préalablement avec de la résine.

Selon un autre aspect, un procédé de fabrication d'une toile formée comprend les étapes consistant à : sélectionner une pluralité d'éléments de renforcement, dans lequel les éléments de renforcement sont formés de filaments qui sont alignés en forme de bande ; agencer les éléments de renforcement pour former une bande ; fournir une résine en contact avec les éléments de renforcement ; agencer les bandes de sorte qu'au moins certaines des bandes chevauchent partiellement des bandes adjacentes ; placer les bandes agencées sur une surface comportant une forme tridimensionnelle ; et activer la résine pour enrober les éléments de renforcement, formant ainsi la toile formée.

L'étape consistant à positionner peut comprendre l'étape consistant à positionner au moins une bande supplémentaire le long d'au moins une partie d'une ligne prévue de force à laquelle la toile sera soumise. L'au moins une bande supplémentaire peut être positionnée de façon sensiblement parallèle aux lignes prévues de force. Au moins une bande supplémentaire peut être positionnée de façon sensiblement perpendiculaire aux lignes prévues de force. Au moins une bande supplémentaire peut être positionnée de façon sensiblement parallèle et au moins une bande supplémentaire peut être positionnée de façon sensiblement perpendiculaire aux lignes prévues de force. L'étape consistant à positionner peut comprendre l'étape consistant à positionner au moins une bande supplémentaire dans un emplacement où la toile nécessitera un renforcement.

Les bandes peuvent comprendre des éléments de renforcement imprégnés préalablement avec de la résine.

Selon un autre aspect, un procédé de fabrication d'une toile formée comprend les étapes consistant à : sélectionner une pluralité d'éléments de renforcement, dans lequel les éléments de renforcement sont formés de filaments qui sont alignés en forme de bande ; fournir une résine en contact avec les éléments de renforcement ; agencer les éléments de renforcement pour former une bande ; agencer les bandes sur une surface comportant une forme tridimensionnelle de sorte qu'au moins certaines des bandes chevauchent partiellement des bandes adjacentes ; et activer la résine pour enrober les éléments de renforcement, formant ainsi la toile formée.

L'étape consistant à positionner peut comprendre l'étape consistant à positionner au moins une bande supplémentaire le long d'au moins une partie d'une ligne prévue de force à laquelle la toile sera soumise. Au moins une bande supplémentaire peut être positionnée de façon sensiblement parallèle aux lignes prévues de force. Au moins une bande supplémentaire peut être positionnée de façon sensiblement perpendiculaire aux lignes prévues de force. L'au moins une bande supplémentaire peut être positionnée de façon sensiblement parallèle et au moins une bande supplémentaire peut être positionnée de façon sensiblement perpendiculaire aux lignes prévues de force. L'étape consistant à positionner peut comprendre l'étape consistant à positionner au moins une bande supplémentaire dans un emplacement où la toile nécessitera un renforcement.

Les bandes peuvent comprendre des éléments de renforcement imprégnés préalablement avec de la résine.

L'étape consistant à positionner les bandes peut comprendre l'étape consistant à stratifier des bandes, les unes sur les autres, pour fournir une pluralité de couches. Le procédé peut en outre comprendre l'étape consistant à positionner les bandes d'une première couche selon des angles par rapport aux bandes d'une seconde couche.

L'étape consistant à positionner les bandes peut comprendre l'étape consistant à positionner au moins certaines des bandes pour se chevaucher sensiblement le long d'une longueur de chaque bande. L'étape consistant à positionner peut comprendre l'étape consistant à positionner au moins certaines des bandes en parallèle, de sorte qu'une première extrémité d'une bande chevauche sensiblement une première extrémité d'une seconde bande. L'étape consistant à agencer les bandes peut comprendre l'étape consistant à stratifier des bandes, les unes sur les autres, pour fournir une pluralité de couches. Le procédé peut en outre comprendre l'étape consistant à positionner les bandes d'une première couche selon des angles par rapport aux bandes d'une seconde couche.

L'étape consistant à agencer les bandes peut comprendre l'étape consistant à positionner au moins certaines des bandes pour se chevaucher sensiblement le long d'une longueur de chaque bande. L'étape consistant à agencer les bandes peut comprendre l'étape consistant à positionner au moins certaines des bandes en parallèle, de sorte qu'une première extrémité d'une bande chevauche sensiblement une première extrémité d'une seconde bande. L'étape consistant à agencer les bandes peut comprendre l'étape consistant à stratifier des bandes, les unes sur les autres, pour fournir une pluralité de couches. Le procédé peut en outre comprendre l'étape consistant à positionner les bandes d'une première couche selon des angles par rapport aux bandes d'une seconde couche.

L'étape consistant à agencer les bandes peut comprendre l'étape consistant à positionner au moins certaines des bandes pour se chevaucher sensiblement le long d'une longueur de chaque bande. L'étape consistant à agencer les bandes peut comprendre l'étape consistant à positionner au moins certaines des bandes en parallèle, de sorte qu'une première extrémité d'une bande chevauche sensiblement une première extrémité d'une seconde bande.

Selon un autre aspect, l'invention comprend une toile formée et renforcée en utilisant le procédé selon l'une des revendications 1-12.

Des éléments de renforcement supplémentaires peuvent être présents le long de lignes prévues de force à laquelle la toile sera soumise.

Des éléments de renforcement supplémentaires peuvent être présents dans une région de la toile qui est prévue pour être soumise à des forces plus importantes.

Les éléments de renforcement supplémentaires peuvent être positionnés de façon sensiblement parallèle aux lignes prévues de force. Les éléments de renforcement supplémentaires peuvent être positionnés de façon sensiblement perpendiculaire aux lignes prévues de force.

Les éléments de renforcement supplémentaires peuvent être positionnés de façon sensiblement parallèle et de façon sensiblement perpendiculaire aux lignes prévues de force.

La toile peut être formée essentiellement d'éléments de renforcement et de résine.

Selon un autre aspect, une toile constitue essentiellement d'éléments de renforcement comprenant des filaments ; et d'une résine activée et polymérisée enrobant les filaments.

Selon un autre aspect, une voile comprenant une toile renforcée, la toile renforcée comprend des éléments de renforcement comprenant des filaments ; et une résine activée et polymérisée enrobant les filaments ; la toile comprend une première surface et une seconde surface opposée, et la première surface et la seconde surface sont dépourvues de feuille séparée de plastique polymérisé.

Des éléments de renforcement supplémentaires peuvent être présents le long de lignes prévues de force à laquelle la voile sera soumise. Des éléments de renforcement supplémentaires peuvent être présents dans une région de la voile qui est prévue pour être soumise à des forces plus importantes. Les éléments de renforcement supplémentaires peuvent être positionnés de façon sensiblement parallèle aux lignes prévues de force. Les éléments de renforcement supplémentaires peuvent être positionnés de façon sensiblement perpendiculaire aux lignes prévues de force. Les éléments de renforcement supplémentaires peuvent être positionnés de façon sensiblement parallèle et de façon sensiblement perpendiculaire aux lignes prévues de force.

La toile peut être formée essentiellement d'éléments de renforcement et de résine.

Selon un autre aspect, une voile comprend une toile renforcée, la toile renforcée étant constituée essentiellement de : éléments de renforcement comprenant des filaments ; et une résine activée et polymérisée enrobant les filaments.

Selon un autre aspect, une toile comprend: une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes.

La toile peut comprendre une première surface et une seconde surface opposée, et la première surface et la seconde surface sont dépourvues de feuille séparée de plastique polymérisé.

Au moins une bande supplémentaire peut être présente le long de lignes prévues de force à laquelle la toile sera soumise. Au moins une bande supplémentaire peut être présente dans une région de la toile qui est prévue pour être soumise à des forces plus importantes. Au moins une bande supplémentaire peut être positionnée de façon sensiblement parallèle aux lignes prévues de force. Au moins une bande supplémentaire peut être positionnée de façon sensiblement perpendiculaire aux lignes prévues de force.

Au moins une bande supplémentaire peut être positionnée de façon sensiblement parallèle et au moins une bande supplémentaire est positionnée de façon sensiblement perpendiculaire aux lignes prévues de force.

Selon un autre aspect, une toile pour fabriquer une voile, comprend une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes et les bandes sont agencées pour contenir les forces prévues dans la voile.

Au moins une bande supplémentaire peut être présente le long de lignes prévues de force à laquelle la toile sera soumise. Au moins une bande supplémentaire peut être présente dans une région de la toile qui est prévue pour être soumise à des forces plus importantes. Au moins une bande supplémentaire peut être positionnée de façon sensiblement parallèle aux lignes prévues de force. Au moins une bande supplémentaire peut être positionnée de façon sensiblement perpendiculaire aux lignes prévues de force. Au moins une bande supplémentaire peut être positionnée de façon sensiblement parallèle et au moins une bande supplémentaire est positionnée de façon sensiblement perpendiculaire aux lignes prévues de force.

Selon un autre aspect, une toile formée comprend une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes, et les filaments sont orientés de façon tridimensionnelle prédéterminée pour former une toile formée.

La toile peut comprendre une première surface et une seconde surface opposée, et la première surface et la seconde surface sont dépourvues de feuille séparée de plastique polymérisé. Au moins une bande supplémentaire peut être présente le long de lignes prévues de force à laquelle la toile sera soumise. Au moins une bande supplémentaire peut être présente dans une région de la toile qui est prévue pour être soumise à des forces plus importantes. Au moins une bande supplémentaire peut être positionnée de façon sensiblement parallèle aux lignes prévues de force. Au moins une bande supplémentaire peut être positionnée de façon sensiblement perpendiculaire aux lignes prévues de force. Au moins une bande supplémentaire peut être positionnée de façon sensiblement parallèle et au moins une bande supplémentaire peut être positionnée de façon sensiblement perpendiculaire aux lignes prévues de force.

Selon un autre aspect une toile formée pour fabriquer une voile, comprend une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes et les bandes sont agencées de façon tridimensionnelle prédéterminée pour contenir les forces prévues dans la voile.

Selon un autre aspect, une voile comprend une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes et les bandes sont agencées pour contenir les forces prévues dans la voile.

Selon un autre aspect, une voile comprend une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes et les bandes sont agencées de façon tridimensionnelle prédéterminée pour contenir les forces prévues dans la voile.

Les bandes peuvent être stratifiées les unes sur les autres pour fournir une pluralité de couches. Les bandes d'une première couche peuvent s'étendre selon des angles par rapport aux bandes d'une seconde couche. Au moins certaines des bandes peuvent se chevaucher sensiblement le long d'une longueur de chaque bande. Au moins certaines des bandes peuvent être positionnées en parallèle, de sorte qu'une première extrémité d'une bande chevauche sensiblement une première extrémité d'une seconde bande. Les bandes peuvent être stratifiées les unes sur les autres pour fournir une pluralité de couches. Les bandes d'une première couche peuvent être disposées selon des angles par rapport aux bandes d'une seconde couche.

Au moins certaines des bandes peuvent se chevaucher sensiblement le long d'une longueur de chaque bande.

Au moins certaines des bandes peuvent être positionnées en parallèle, de sorte qu'une première extrémité d'une bande chevauche sensiblement une première extrémité d'une seconde bande.

Un procédé de fabrication de toiles formées et renforcées, consiste à fabriquer une toile constituée d'une membrane qui enrobe des éléments de renforcement en continu alterné dans une presse qui comporte une cuve supérieure dont la partie inférieure est constituée par un élément souple et une cuve inférieure dont la partie supérieure est constituée par un élément souple, la cuve supérieure comportant une latte de formage dont la forme peut être réglée par des tiges de réglages et dont la forme de réglage provoque la déformation élastique en trois dimensions des éléments souples et par conséquent de la membrane et des éléments de renforcement qui se trouvent dans la presse, en une position active dans laquelle la latte présente une forme et dans une position non active dans laquelle la latte de formage est non active et ne provoque aucune déformation de la membrane et des éléments de renforcement qui sont pressés à plat, par le fait que les portions de membrane et d'éléments de renforcement sont préparés avant pressage sur une bande de transport qui est posée sur une table de préparation qui ensuite place ces portions sous la presse avec pression et chauffage, et par le fait que les portions de membrane et d'éléments de renforcement sont chevauchés lors de la préparation de manière à constituer à la sortie de la presse une toile homogène qui comporte des portions plates et des portions formées en trois dimensions selon des formes multiples déterminée par le réglage de la latte de formage lors du pressage de chaque portion de membrane et d'éléments de renforcement dont la longueur est déterminée par la largeur de la presse et de la table de préparation.

De manière optimale, la cuve supérieure de la presse est remplie d'air dont la pression est réglable et contrôlée par un manomètre, la pression de pressage étant fournie par l'air comprimé contenu dans la cuve supérieure.

De manière optimale, la cuve inférieure est remplie d'eau dont le niveau est maintenu par le principe des vases communicants par liaison de l'amenée et sortie d'eau qui est reliée à un réservoir, et dont la pression est maintenue lors du pressage par la fermeture de la vanne.

De manière optimale, la polymérisation ou l'activation de la résine constituant la membrane est obtenue par chauffage de la table de préparation.

De manière optimale, l'activation de la résine est obtenu par chauffage de la table de préparation et que la polymérisation est obtenue par le chauffage d'une ou l'autre des cuves.

De manière optimale, l'activation ou la polymérisation de la résine est obtenue par le chauffage de la presse.

De manière optimale, les portions de membrane et d'éléments de renforcement sont posées en se chevauchant partiellement entre eux de manière à garantir l'homogénéité de la toile.

De manière optimale, les portions de membrane et d'éléments de renforcement peuvent être disposées dans toutes les directions et aussi l'un sur l'autre par croisement selon la direction des efforts subis par la toile et selon les endroits où la toile doit comporter des renforcements particuliers.

De manière optimale, qu'un élément de blocage de la toile est activé lors du pressage.

Les principes de l'invention permettent de réduire considérablement les coûts de fabrication tout en permettant d'obtenir des toiles plus performantes.

Les figures annexées illustrent schématiquement et à titre d'exemple les principes de l'invention.
La figure 1 est une vue d'ensemble de côté de la presse et des différents éléments annexés à la presse.
La figure 2 est une vue de face de la presse avec le dispositif de formage.
La figure 3 est vue d'ensemble de côté de la presse avec le dispositif de formage en position de formage.
La figure 4 est une vue de face de la presse avec le dispositif de formage en position de formage.
La figure 5 est une vue de la presse avec un dispositif de chauffage à infra-rouge.
La figure 6 est une vue en coupe d'une membrane enrobant des fils disposés d'une manière uni-directionnelle.
La figure 7 est une vue en coupe d'une membrane enrobant des fils disposés d'une manière multi-directionnelle.
La figure 8 est une vue en plan de bandes avant pressage. La figure 9 est en vue en plan d'une toile avec des bandes disposées en différentes directions.
La figure 10 est une vue en coupe de portions de toile formées en trois dimensions.
La figure 11 est une vue en coupe de côté d'une toile dépliée.

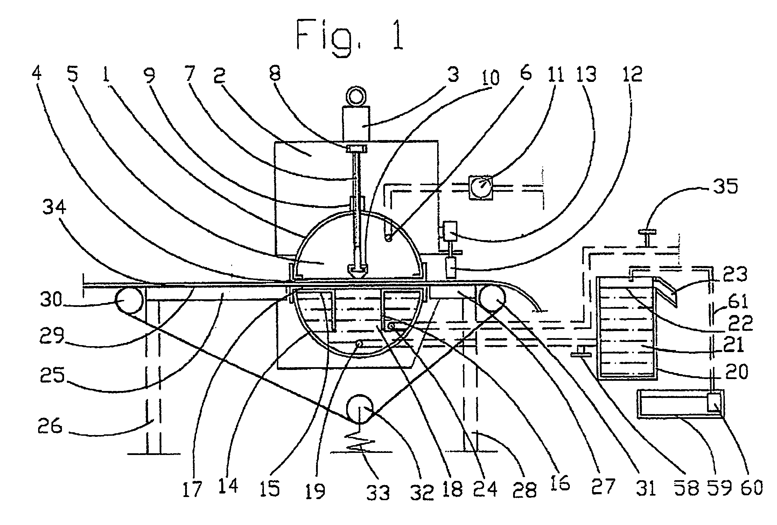

En référence tout d'abord à la figure 1, une presse est constituée par une cuve supérieure 1 et une cuve inférieure 14. La cuve inférieure 14 comporte des cornières en forme de L 15 et 16. La partie supérieure de la cuve inférieure 14 comporte un élément souple 17 (une membrane en silicone par exemple) qui est monté d'une manière hermétique sur la cuve inférieure 14. La cuve inférieure 14 est remplie d'eau 18 qui est amenée par une entrée d'eau 24. L'entrée d'eau est contrôlée par une vanne 35. La cuve inférieure comporte une sortie d'eau 19 qui est une sortie d'équilibrage. La sortie d'eau 19 est reliée par un conduit à un réservoir 20 qui contient de l'eau 21. Le réservoir comporte un déversoir d'eau 23 qui détermine la hauteur du niveau d'eau 22. La hauteur du niveau d'eau 22 est prévue pour se trouver au niveau de la face inférieure de l'élément souple 17. Le niveau d'eau dans la cuve inférieure est ainsi contrôlé par le principe des vases communicants. Une vanne 58 est montée entre la sortie d'eau 19 et le réservoir 20. La fermeture de la vanne 58 permet de bloquer la circulation d'eau et d'annuler le principe des vases communicants. Un réservoir d'équilibrage 59 est placé sous le déversoir 23. Lorsque de l'eau se déverse par le déversoir 23 dans le réservoir d'équilibrage 59, le surplus d'eau dans le réservoir d'équilibrage est constamment ramené dans le réservoir 20 par un conduit 61 qui est relié à une pompe 60. La cuve supérieure 1 est fermée dans sa partie inférieure par un élément souple 4 qui est monté d'une manière hermétique à la cuve supérieure. La cuve supérieure contient de l'air 5 qui est amené par une entrée d'air 6. La pression de l'air est contrôlée par un manomètre 11. La cuve supérieure 1 comporte des éléments de renforcement 2. Une poutre métallique 3 est montée sur les éléments de renforcement, le tout étant assemblé par soudure par exemple. La poutre métallique 3 est reliée à un vérin ou à n'importe quel dispositif mécanique permettant d'une part de soulever la cuve lors des opérations de préparation ou d'appliquer une pression vers le bas lors de l'opération de pressage. Une tige filetée 7 qui comporte un écrou d'actionnement 8 coopère avec un élément taraudé 9 qui est monté sur la cuve supérieure. L'extrémité inférieure de la tige est reliée avec jeux à une latte de formage 10. Une table de préparation 25 est montée sur des pieds 26 et une table de réception 27 est montée sur des pieds 28. Une bande de transport 29 est montée déplaçable sur les tables et sur l'élément souple 17 de la cuve inférieure 14. La bande de transport est maintenue par deux rouleaux fixes 30 et 31 et par un rouleau déplaçable 32 qui est soumis à l'action d'un ressort de traction 33 qui règle la tension de la bande de 'transport 29 en fonction des déformations de celle-ci. Les bandes renforcées, 34 qui constituent la toile une fois les pressages effectués sont préparés sur la bande de transport, passent ensuite sous la presse et sortent sous forme d'une toile constituée par une membrane qui enrobe des filaments.

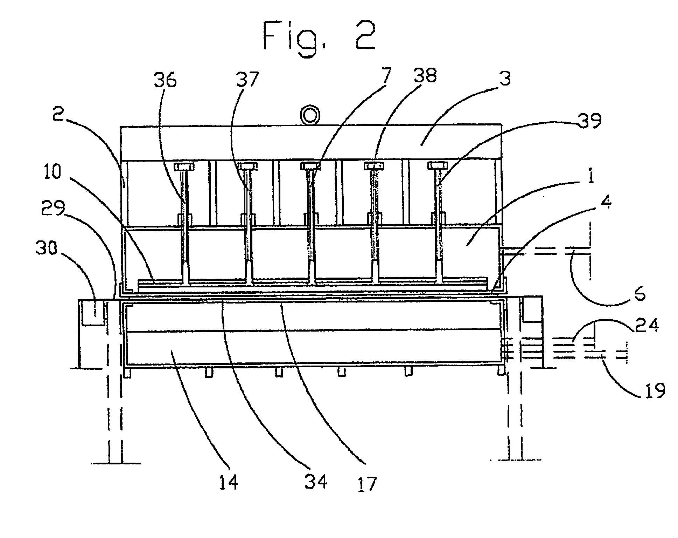

La figure 2 montre en vue de face les tiges filetées 36, 37, 7, 38, 39, qui sont reliées dans leur partie inférieure à la latte de formage 10. La latte de formage n'est pas fixée aux tiges dans son sens longitudinal, mais elle est montée déplaçable de manière à ce que lorsque la latte de formage est déformée les tensions sur elle puissent être absorbées. La figure 2 montre la poutre métallique 3, la cuve supérieure 1 dans laquelle la latte de formage est installée et les éléments de renforcement 2 de la cuve supérieure, les éléments souples 4 et 17, l'entrée d'eau 24, la sortie d'eau 19 d'équilibrage, l'entrée d'air 6, la cuve inférieure 14, la bande de transport 29 et le rouleau 30 et les bandes renforcées 34.

La position montrée sur les figures 1 et 2 est la position de pressage à plat dans laquelle la latte de formage est en position non active. Dans cette position l'eau de la cuve inférieure est maintenue à niveau par le principe des vases communicants et ensuite la vanne 58 est fermée, et l'air contenu dans la cuve supérieure est mis sous pression, à une valeur de pression qui est déterminée par la nature de la résine des bandes renforcées.

Lors du pressage la résine doit être chauffée ou activée à une température déterminée par la nature de la résine. Plusieurs possibilités de chauffage peuvent être prévues selon la figure 1. Une possibilité est le chauffage de l'air contenu dans la cuve supérieure. Une possibilité est le chauffage de l'eau contenue dans la cuve inférieure. Une possibilité est le chauffage de la table de préparation juste avant que les bandes renforcées soient déplacées sous la presse.

Pour le cas où le chauffage n'est pas obtenu par la table de préparation cette table est de toute manière chauffée à une certaine température nécessaire à une légère adhésion des bandes renforcées pour faciliter la pose de ces bandes.

La figure 1 montre un élément de blocage 12 qui est actionné par un vérin de blocage 13. Dans la position de déplacement de la bande de transport l'élément de blocage est inactif.

Dans la pratique les premières bandes renforcées sont disposées sur la table de préparation. Une fois la pose des bandes renforcées effectuée, la bande de transport place ces premières bandes renforcées sous la presse, la cuve supérieure est déplacée vers la base jusqu'à contact avec pression sur la cuve inférieure, par chauffage et par la pression d'air de la cuve supérieure les bandes renforcées se transforment en une membrane enrobant des filaments, le tout constituant une toile étanche ou non étanche. Une ou les deux cuves sont refroidies, refroidissant ainsi la membrane. Le déplacement des bandes renforcées par la bande de transport laisse une portion des bandes sur la table de préparation pour le raccordement avec la deuxième série de bandes renforcées. Lors du temps de pressage des premières bandes renforcées, les deuxièmes bandes sont disposées sur la table de préparation et lorsque l'opération de pressage des premières bandes renforcées est accomplie la pression d'air est remise à la pression ambiante, la cuve supérieure est soulevée et les deuxièmes bandes renforcées sont placées sous la presse. Le temps de fabrication d'une toile est déterminé par le temps nécessaire au chauffage des bandes renforcées et au refroidissement. A titre d'exemple, selon les résines utilisées le temps de pressage peut se limiter à quelques minutes qui sont de toute manière nécessaires pour la disposition des bandes de renforcement suivantes.

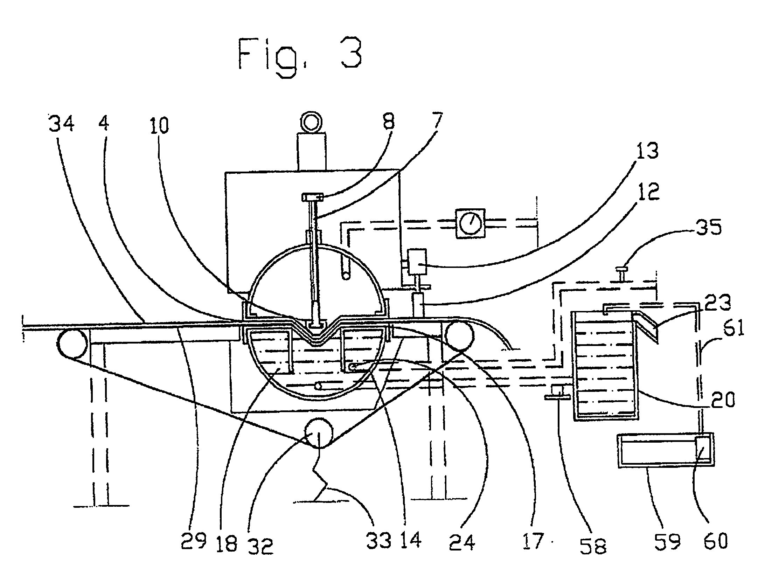

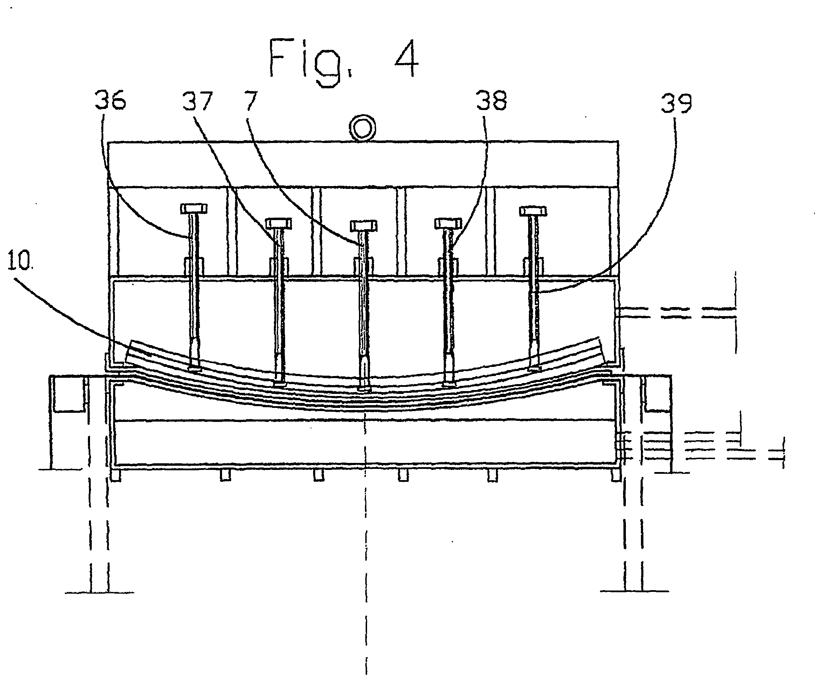

Les figures 3 et 4 montrent le pressage d'une portion de bandes renforcées avec formage en trois dimensions. Dans ce cas, lorsque les bandes renforcées 34 sont installées sous la presse les tiges 36, 37, 7, 38, 39, sont actionnées, par exemple avec l'aide d'écrous tel que l'écrou 8 de manière à donner une forme d'arc à la latte 10. L'élément de blocage 12 est actionné par le vérin de blocage 13 et bloque la portion de toile déjà terminée. De cette manière, les fils des bandes renforcées peuvent prendre la forme prévue, donc la différence de longueur résultant de la troisième dimension. Lors du pressage avec formage les éléments 'souples 4 et 17 et la bande transport 29 prennent également la forme choisie. Le rouleau déplaçable 32 se déplace vers le haut en maintenant la tension .de la bande de transport par le ressort 33. La position de forme, donc le déplacement de la latte de formage 10 vers le bas réduit le volume de la cuve inférieure 14 et l'eau 18 en trop peut sortir par la sortie d'eau qui passe dans le réservoir 20 et qui se déverse par le déversoir 23. La vanne 58 est fermée bloquant la quantité d'eau dans la cuve 14, et l'air 5 est mis sous pression.

Lorsque le pressage est terminé, la latte de formage est replacée en position non active, la vanne 58 est ouverte, l'eau est remise à niveau par la pompe 60 qui ramène l'eau excédentaire contenue dans le réservoir d'équilibrage 59 jusque dans le réservoir 20 par le conduit 61 Les autres opérations de pressage sont identiques aux opérations de pressage à plat.

Dans la pratique et dans le but d'obtenir la forme voulue en trois dimensions de toile finie, des portions de la toile sont pressées à plat, d'autres avec diverses formes de la latte de formage.

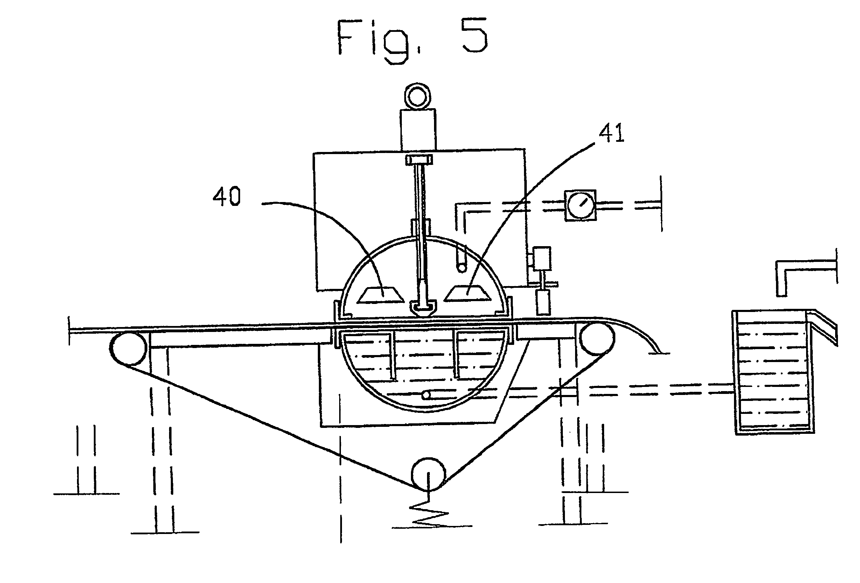

La figure 5 montre une autre possibilité de chauffage avec des éléments de chauffage à infra-rouge 40 et 41 qui sont disposés dans la cuve supérieure.

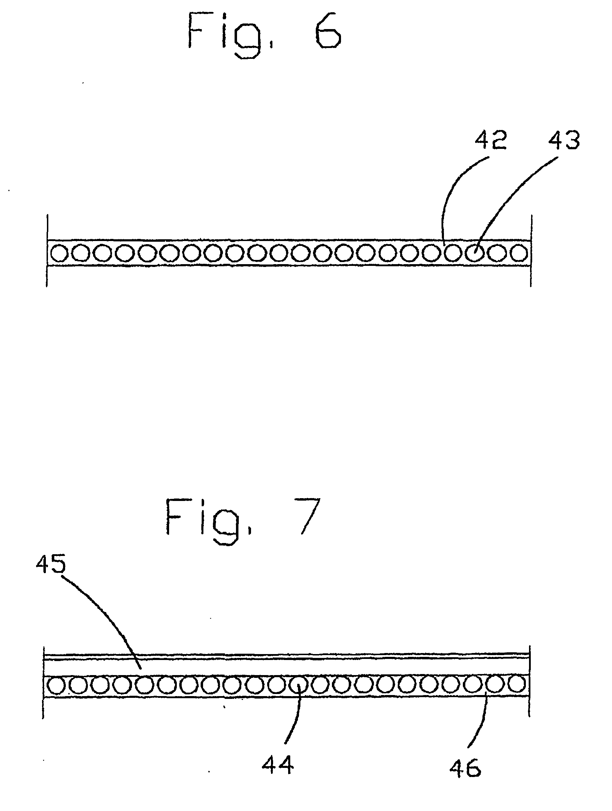

La figure 6 montre une portion de toile avec la membrane 42 qui enrobe les fils 43 disposés d'une manière unidirectionnelle. Dans la pratique et après pressage, les fils sont en fait constitués par des milliers de filaments.

La figure 7 montre une portion de toile avec la membrane 46 enrobant des fils de chaînes 44 et des fils de trames 45 d'une manière multi-directionnelle.

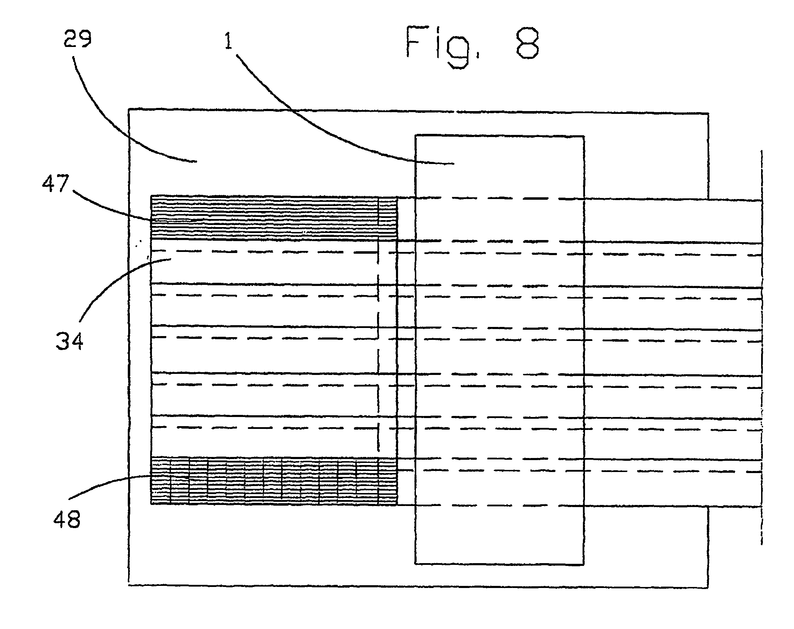

La figure 8 montre en vue en plan les bandes renforcées 34 qui sont disposées sur la bande de transport 29 qui est posée sur la table de préparation avec passage sous la presse représentée sur cette figure par la cuve supérieure 1. La figure 8 montre des différentes sortent de bandes renforcées 47 uni-directionnelle ou 48 bi-directionnelle qui peuvent être utilisées à titre d'exemple.

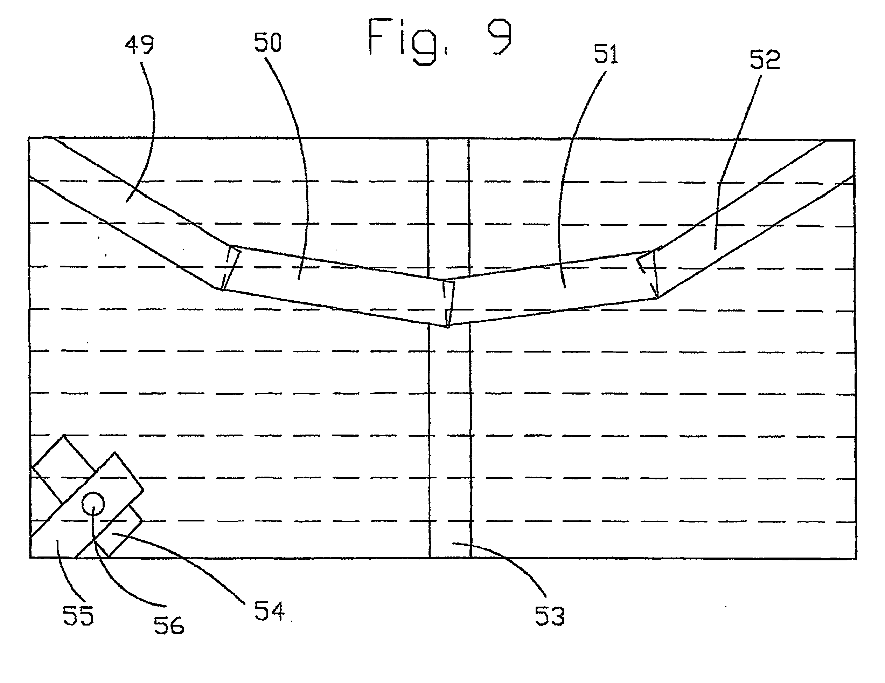

La figure 9 est une vue en plan d'une toile qui montre quelques exemples de possibilités de disposition de bandes renforcées, soit les bandes renforcées 49, 50, 51, 52, qui permettent d'obtenir une résistance selon un arc. La bande 53 qui présente un renforcement à 90°, ou des bandes 55 et 54 qui peuvent être disposées à l'endroit d'un oeillet 56 par exemple.

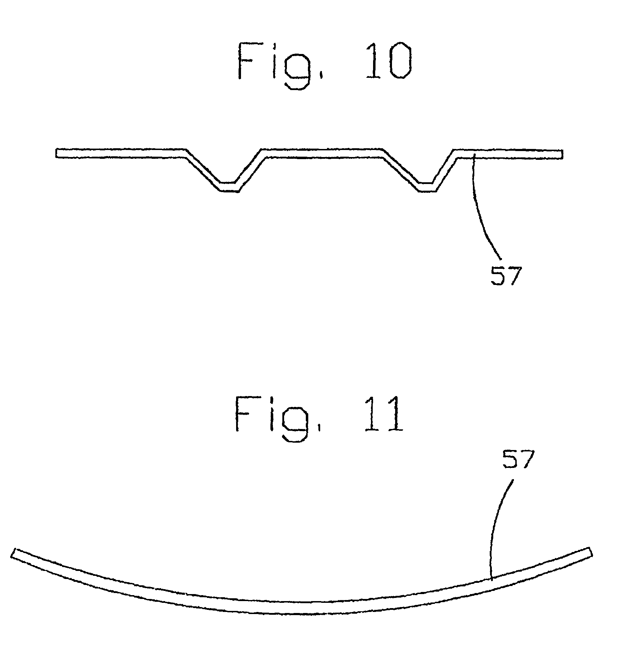

La figure 10 montre une vue en coupe d'une toile avec des portions déformées en trois dimensions selon la figure 4 en position non tenue.

La figure 11 montre la forme à trois dimensions que prend la toile lorsqu'elle est tendue.

Les différents éléments d'actionnement, les tiges filetées, les déplacements de la cuve supérieure, l'avance de la bande de transport, l'élément de blocage, l'ouverture et la fermeture de des amenées et sorties d'eau, l'enclenchement et le déclenchement du chauffage, la pression de l'air, peuvent être obtenus par des moteurs électriques, pas-à-pas par exemple, des vérins, des vannes ou des commandes électriques. Chacun de ces éléments peut être connecté à un ordinateur dont le programme gère l'actionnement. Il est également possible de disposer les bandes renforcées par un dispositif de transport et de placement qui peut également être géré par le programme informatique.

De cette manière, la fabrication de la toile peut être complètement automatique.

L'utilisation des toiles en trois dimensions est multiple, et ces toiles peuvent être utilisées dans tous les cas nécessitant des toiles légères, très résistantes et à trois dimensions.

## Revendications

1. Procédé de fabrication d'une toile formée et renforcée, consistant en :
la disposition de bandes (34, 49-55), comprenant des filaments et de la résine (42, 46), sur un moule de forme (10, 17) ;
l'application de pression et de chaleur sur les bandes disposées sur le moule, assemblant ainsi les bandes pour former une toile formée.

2. Procédé selon la revendication 1, **caractérisé en ce que** les bandes sont positionnées afin de former une série de bandes qui se chevauchent (34, 49-55) ; et **caractérisé en ce que** la série de bandes qui se chevauchent est disposée sur le moule de forme.

3. Procédé de fabrication d'une voile, consistant en :
la formation d'une voile à partir de la toile formée par le procédé de la revendication 1.

4. Procédé selon la revendication 3, **caractérisé en ce que** les bandes sont positionnées afin de former une série de bandes qui se chevauchent (39, 49-55); et **caractérisé en ce que** la série de bandes qui se chevauchent est positionnée sur le moule de forme.

5. Procédé selon l'une des revendications 1-4, **caractérisé en ce que** la disposition des bandes consiste **en ce que** la disposition des bandes soit telle que les filaments sont agencés selon la direction et l'importance des forces auxquelles la toile ou la voile sera soumise.

6. Procédé selon l'une des revendications 1-5, **caractérisé en ce que** la voile ou la toile a au moins un coin, et **en ce que** les filaments d'au moins certaines des bandes disposées dépassent du coin vers l'extérieur.

7. Procédé selon l'une des revendications 1-6, **caractérisé en ce que** la disposition des bandes consiste en la disposition d'au moins une bande dans un emplacement où la voile ou la toile nécessitera un renforcement.

8. Procédé selon la revendication 7, **caractérisé en ce que** l'emplacement sur la voile ou la toile qui nécessitera un renforcement comprend un coin.

9. Procédé selon l'une des revendications 1 à 8, **caractérisé en ce que** les filaments d'au moins certaines des bandes disposées dépassent du coin vers 10 l'extérieur.

10. Procédé selon l'une des revendications 1-9, **caractérisé en ce qu'**au moins certaines des bandes (34, 49-55) sont disposées de façon à se chevaucher partiellement.

11. Procédé selon l'une des revendications 1-10, consistant en l'application de suffisamment de chaleur et de pression pour que les filaments des différentes bandes se mélangent.

12. Procédé selon l'une des revendications 1-11, consistant en la disposition des bandes de manière à ce que la toile ou la voile s'étendent dans différentes directions.

13. Une toile formée et renforcée réalisée en utilisant le procédé selon l'une des revendications 1-12 et ayant une pluralité de bandes chacune avec des filaments et de la résine, assemblées afin de former une toile formée avec les filaments encastrés dans la résine, et la résine des bandes adjacentes étant mélangée.

14. Une voile réalisée à partir de la toile de la revendication 13.

15. Une toile formée et renforcée selon la revendication 13 ou une voile selon la revendication 14 qui a une première surface et une seconde surface opposée, et dans laquelle la première surface et la seconde surface sont exemptes d'une feuille de plastique polymérisée distincte, la première et la seconde surfaces étant définies par la résine et les filaments de la pluralité de bandes elles-mêmes.

## Claims

1. A method of manufacturing a shaped, reinforced fabric comprising:
positioning strips (34, 49-55), comprising filaments and resin (42, 46), on a shaped mold (10, 17, 36-39);
applying pressure and heat to the strips on the mold, thereby joining the strips to form a shaped fabric.

2. The method of claim 1, wherein the strips are positioned to form a set of overlapped strips (34, 49-55); and wherein the set of overlapped strips is positioned on the shaped mold.

3. A method of manufacturing a sail comprising:
positioning strips (34, 49-55), comprising filaments and resin, on a shaped mold (10, 17, 36-39);
applying pressure and heat to the strips on the mold, thereby joining the strips to form a shaped fabric; and
forming a sail from the shaped fabric.

4. The method of claim 3, wherein the strips are positioned to form a set of overlapped strips (39, 49-55); and wherein the set of overlapped strips is positioned on the shaped mold.

5. The method of any one of claims 1-4, wherein positioning strips comprises positioning strips such that the filaments are disposed according to the direction and magnitude of the forces to which the fabric or sail will be subjected.

6. The method of any one of claims 1-5, wherein the sail or fabric has at least one corner, and the filaments of at least some of the positioned strips extend outwardly from the corner.

7. The method of any one of claims 1-6, wherein positioning the strips comprises positioning at least one strip in a location on the sail or fabric that is predicted to require reinforcement.

8. The method of claim 7, wherein the location on the sail or the fabric predicted to require reinforcement comprises a corner.

9. The method of any of claims 1 to 8, wherein the filaments of at least some of the positioned strips extend outwardly from the corner.

10. The method of any one of claims 1-9, wherein at least some of the strips (34, 49-55) are positioned to partially overlap one another.

11. The method of any one of claims 1-10, comprising applying sufficient heat and pressure such that the filaments of the different strips intermix.

12. The method of any one of claims 1-11, comprising positioning strips such that filaments of the fabric or the sail extend in different directions.

13. A shaped reinforced fabric made using the method of any of claims 1 to 12 and having a plurality of strips each with filaments and resin, joined to form a shaped fabric with the filaments encased in resin, and the resin of adjacent strips being intermixed.

14. A sail made of the fabric of claim 13.

15. A sail according to claim 14 which has a first surface and an opposing second surface, and wherein both the first surface and the second surface are free of a separate polymerised plastic sheet, the first and second surfaces being defined by the resin and filaments of the plurality of strips themselves.

## Patentansprüche

1. Verfahren zur Herstellung eines geformten und verstärkten Tuches, bestehend im:
Anordnen von Streifen (34, 49-55), die Filamente und Harz (42, 46) umfassen, auf einer Form (10, 17);
Anlegen von Druck und Wärme an die auf der Form angeordneten Streifen, wodurch die Streifen verbunden werden, um ein geformtes Tuch zu bilden.

2. Verfahren nach Anspruch 1, **dadurch gekennzeichnet, dass** die Streifen positioniert werden, um eine Reihe von sich überlappenden Streifen (34, 49-55) zu bilden, und **dadurch gekennzeichnet, dass** die Reihe von sich überlappenden Streifen auf der Form angeordnet wird.

3. Verfahren zur Herstellung eines Segels, das in der Ausbildung eines Segels aus dem mittels des Verfahrens des Anspruches 1 geformten Tuch besteht.

4. Verfahren nach Anspruch 3, **dadurch gekennzeichnet, dass** die Streifen positioniert werden, um eine Reihe von sich überlappenden Streifen (34, 49-55) zu bilden, und **dadurch gekennzeichnet, dass** die Reihe von sich überlappenden Streifen auf der Form angeordnet wird.

5. Verfahren nach einem der Ansprüche 1 bis 4, **dadurch gekennzeichnet, dass** das Anordnen der Streifen darin besteht, dass die Anordnung der Streifen derart ist, dass die Filamente in der Richtung und entsprechend der Stärke der Kräfte, denen das Tuch oder das Segel ausgesetzt sein wird, ausgerichtet sind.

6. Verfahren nach einem der Ansprüche 1 bis 5, **dadurch gekennzeichnet, dass** das Segel oder das Tuch wenigstens eine Ecke aufweist und dass die Filamente von wenigstens einigen der angeordneten Streifen die Ecke nach außen hin überragen.

7. Verfahren nach einem der Ansprüche 1 bis 6, **dadurch gekennzeichnet, dass** das Anordnen der Streifen darin besteht, wenigstens einen Streifen an einer Stelle anzuordnen, an der das Segel oder das Tuch eine Verstärkung benötigt.

8. Verfahren nach Anspruch 7, **dadurch gekennzeichnet, dass** die Stelle an dem Segel oder dem Tuch, welche eine Verstärkung benötigt, eine Ecke umfasst.

9. Verfahren nach einem der Ansprüche 1 bis 8, **dadurch gekennzeichnet, dass** die Filamente von wenigstens einigen der angeordneten Streifen die Ecke nach außen hin überragen.

10. Verfahren nach einem der Ansprüche 1 bis 9, **dadurch gekennzeichnet, dass** wenigstens einige der Streifen (34, 49-55) derart angeordnet sind, dass sie sich teilweise überlappen.

11. Verfahren nach einem der Ansprüche 1 bis 10, das im Anlegen von ausreichend Wärme und Druck, damit sich die Filamente der verschiedenen Streifen vermischen, besteht.

12. Verfahren nach einem der Ansprüche 1 bis 11, das darin besteht, die Streifen derart anzuordnen, dass das Tuch oder das Segel sich in unterschiedliche Richtungen erstrecken.

13. Geformtes und verstärktes Tuch, das unter Verwendung des Verfahrens nach einem der Ansprüche 1 bis 12 hergestellt ist und das eine Vielzahl von Streifen, jeweils mit Filamenten und Harz, aufweist, die verbunden sind, um ein geformtes Tuch mit den in das Harz eingebetteten Filamenten zu bilden, und wobei das Harz der benachbarten Streifen vermischt ist.

14. Segel, das aus dem Tuch des Anspruches 13 hergestellt ist.

15. Geformtes und verstärktes Tuch nach Anspruch 13 oder Segel nach Anspruch 14, das eine erste Fläche und eine gegenüberliegende zweite Fläche aufweist, und wobei die erste Fläche und die zweite Fläche keine getrennte Folie aus polymerisiertem Kunststoff aufweisen, wobei die erste und die zweite Fläche von dem Harz und den Filamenten der Vielzahl von Streifen selbst gebildet sind.
